(19) Europäisches Patentamt
European Patent Office
Office européen des brevets

(11) **EP 4 446 920 A1**

(12) **EUROPEAN PATENT APPLICATION**

(43) Date of publication:
**16.10.2024   Bulletin 2024/42**

(21) Application number: **23167522.4**

(22) Date of filing: **12.04.2023**

(51) International Patent Classification (IPC):
**G06F 21/60** [(2013.01)]       **G06F 21/62** [(2013.01)]

(52) Cooperative Patent Classification (CPC):
**G06F 21/6245; G06F 21/60; G06N 3/098**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Technische Universität München**
**80333 München (DE)**

(72) Inventors:
• **Xhemrishi, Marvin**
  **80801 München (DE)**

• **Wachter-Zeh, Antonia**
  **80333 München (DE)**
• **Graell Amat, Alexandre**
  **41114 Gothenburg (SE)**
• **Östman, Johan**
  **41658 Gothenburg (SE)**

(74) Representative: **Lucke, Andreas**
  **Boehmert & Boehmert**
  **Anwaltspartnerschaft mbB**
  **Pettenkoferstrasse 22**
  **80336 München (DE)**

(54) **A METHOD AND SYSTEM FOR IDENTIFICATION OF MALICIOUS CLIENTS WITH SECURE AGGREGATION OF DATA FROM A PLURALITY OF CLIENTS**

(57)    A computer-implemented method for secure aggregation of data from a plurality of clients. The method comprises requesting data from the plurality of clients , and receiving a plurality of masked data portions from the plurality of clients , wherein the plurality of clients are grouped into a plurality of partially overlapping client groups , and each masked data portion is associated with one of the client groups. The method further comprises aggregating the masked data portions of each client group to obtain a plurality of group data aggregates, wherein each group data aggregate is associated with a respective client group , and estimating, based on a quality metric for each of the plurality of group data aggregates, a subset of malicious clients of the plurality of clients. The method further comprises determining a benign data aggregate based on a remaining plurality of benign clients, wherein the benign clients do not form part of the malicious clients.

Fig. 3

EP 4 446 920 A1

**Description**

FIELD OF THE INVENTION

The present invention is in the field of secure aggregation. More precisely, the present invention relates to the secure aggregation of training results in federated machine learning with resilience to malicious users.

BACKGROUND

A machine learning model, such as an artificial neural network, generally approximates a labeling function for input data based on training results for other input data. For example, a machine learning model may comprise artificial neurons, which process input data according to internal weights and biases to produce a respective output, and multiple layers of artificial neurons may be connected to form a machine learning model. The output of the machine learning model for a sample input may then be compared to an optimal output, and the weights and biases of the machine learning model may be optimized based on the difference, e.g. using an optimization algorithm such as stochastic gradient descent. This optimization process is often referred to as the training or learning of the machine learning model.

Federated learning (FL) is a form of machine learning where external clients that own private data collaboratively learn a global (machine learning) model with the help of a central server that serves as a coordinator. The key concept is that clients do not need to share their private data with the central server learning the global model, but only the local updates, which are aggregated by the central server to update the global model. Local updates can be gradients (FedSGD: federated stochastic gradient descent) or local models (FedAvg: federated averaging). By keeping raw data local, some level of privacy is preserved. However, sharing the local gradients can still leak significant amount of information about the client's data.

Bonawitz et al. ("Practical Secure Aggregation for Privacy-Preserving Machine Learning") teaches a protocol for secure aggregation of high-dimensional data, wherein a server computes the sum of large, user-held data vectors from mobile devices in a secure manner. The clients share secret keys to mask their individual training results in a manner that the aggregation of all the masked training results cancels the masks. The server can then sum the masked training results to obtain an aggregated update vector for updating the global model, while access to the individual training results remains unavailable to the server.

Zhang et al. (SAFELearning: Enable Backdoor Detectability In Federated Learning With Secure Aggregation) teaches a federated learning algorithm, in which the clients are grouped into subgroups, whose updates are aggregated on a sub-group basis. The aggregates of the subgroups are compared to the global model, and if the standard deviation of their Euclidean distances to the global model are above a threshold, the aggregates with the highest distances to the global model are replaced with the global model. As a result, the impact of malicious users can be reduced based on the detection of suspicious subgroups.

SUMMARY OF THE INVENTION

The known methods for secure aggregation however still suffer from an often disadvantageous compromise between the privacy of the data, the resilience to attacks from malicious users, and the efficiency of the machine learning.

In view of this state-of-the-art, the object of the invention is to provide a method for secure aggregation of data from a plurality of clients which preserves a privacy of the user's data, but has high resilience to malicious users.

This object is solved by methods and a system according to the independent claims. The dependent claims relate to preferred embodiments.

According to a first aspect, the invention relates to a computer-implemented method for secure aggregation of data from a plurality of clients. The method comprises requesting data from the plurality of clients, and receiving a plurality of masked data portions from the plurality of clients, wherein the plurality of clients are grouped into a plurality of partially overlapping client groups, and each masked data portion is associated with one of the client groups. The method further comprises aggregating the masked data portions of each client group to obtain a plurality of group data aggregates, wherein each group data aggregate is associated with a respective client group. The method then comprises estimating, based on a quality metric for each of the plurality of group data aggregates, a set of malicious clients of the plurality of clients, and determining a benign data aggregate based on a remaining plurality of benign clients, wherein the benign clients do not form part of the malicious clients.

The method can harness the assignment into partially overlapping client groups of clients to identify a subset of malicious clients. In the sense of the disclosure, a plurality of partially overlapping client groups are groups of clients, wherein each client group overlaps in at least one common client with one other client group of the plurality of partially overlapping client groups. The method may estimate the set of malicious clients based on a decoding algorithm, such as a maximum likelihood estimation algorithm, a message passing estimation algorithm, or a maximum a posteriori probability estimation algorithm, which may estimate, based on the quality metric and/or based on a detection of the group data aggregates of a plurality of client groups not meeting a quality metric threshold, which clients in the partially overlapping client groups are likely to be malicious. As a result, the contribution of malicious clients to the data aggregates may be exempted from future updates, e.g. by assigning the malicious clients to dummy client groups, whose data is not aggregated as part of determining the benign data aggregate, or by no longer requesting data from the clients identified as malicious.

The benign data aggregate should be an aggregate of the benign client's data. For example, the benign data aggregate may be an aggregate of group data aggregates, which all meet a quality metric threshold. As the malicious clients can be exempted from future data aggregates, the benign data aggregate may progressively approach a data aggregate of the benign clients, and may therefore be resilient to a contribution of the malicious clients in the method. As another example, the benign client's may be asked to retransmit their data, and the benign data aggregate may be formed based on the retransmitted data.

A malicious client may be any client which harms the aggregation process, such as a client which tries to degrade the model performance in machine learning with false data updates, or a client which tries to skew the model output for a subset of model inputs. However, it is not necessary that the malicious client needs to have an intent of falsifying the aggregation of data, e.g. in the case that a client operates a malfunctioning sensor and systematically produces erroneous data. Rather, a malicious client may be considered any client which provides data which does not meet a quality criterion for data updates of the secure aggregation method. In a federated learning setting, the quality criterion may be a distance of model updates from a validation model updates, e.g. obtained by the server based on validation data, or a distance of model updates from a median/mean model update. The quality criterion may be based on a mutual agreement on data quality, and may be pre-determined for the secure aggregation method.

In the context of machine learning, the quality criterion may be based on a comparison of the training result obtained by the client to training results obtained by other clients and/or based on training results obtained with a validation data set of training data. Each client may be provided with the same global model, and may locally train the global model. The masked data portion may be based on a training result of a machine learning algorithm executed by the client. The machine learning algorithm may train the global model, which each client may receive from a server, e.g. a central server, based on training data available at the client, and the training result may be shared as the masked data portion.

In preferred embodiments, each client masks a training result of training a machine learning model by the client, and the method comprises receiving the masked training result as a masked data portion.

For example, the training result may be a machine learning model, a characterization of the machine learning model, parameters of a machine model, or a portion thereof, or may be a data update, such as a difference vector between a global model and the machine learning model trained by the client, or may be an update vector for updating the machine learning model, e.g. obtained based on a gradient determined as part of a machine learning process on the client.

In preferred embodiments, the masked data portions are masked with a mask based on group-based or pairwise masking by clients in the group, such that the mask is cancelled by aggregating all of the masked data portions.

The masking of the data to obtain the masked data portion may be based on shared secrets between clients of the respective group, wherein each client may mask its data portion based on the secrets shared with it, such that, when the masked data portions are aggregated, the masks cancel and the group data aggregate may be obtained.

In preferred embodiments, aggregating the masked data portions of each client group comprises summing the masked data portions of all clients of a client group.

For example, each client may add or subtract a pair-wise mask, which can be obtained based on a pair-wise secret shared with another client of the client group, to its data portion, such that the sum of the masked data portions of the clients in possession of the pair-wise secret cancels the pair wise mask from the sum of their respective data portions. Usually, the clients will add/subtract a plurality of pair-wise masks to their respective data portion, such that a server may only obtain an aggregate of a corresponding plurality of data portions.

In preferred embodiments, the plurality of data aggregates are at least partially unmasked by the aggregating of all masked data portions of the client group.

For example, the group data aggregate may be partially masked to improve the privacy of the client data, and the determination of the quality metric for the group data aggregate may be based on the partially unmasked portion of the group data aggregate. The partial mask of the group data aggregate may be cancelled when all group data aggregates are aggregated.

Generally, the clients may be assigned to client groups based on a compromise between a degree of privacy for the client's data and a detection probability for malicious clients. The clients may mask a copy of their training result for each client group that they are assigned to, and the assignment to the client groups may be selected, such that the privacy of the client's training data is maintained. Preferably, an assignment of the clients to the overlapping client groups should be selected, such that a linear combination of the group data aggregates does not result in the reveal of the data of one of the clients.

In preferred embodiments, a grouping of the clients into respective client groups is mathematically equivalent to an assignment according to a plurality of binary assignment vectors, wherein each assignment vector defines an assignment of clients to one of the client groups, and wherein the assignment vectors only span vectors with a Hamming weight $\geq 2$, in particular with a Hamming weight $\geq 3$, preferably with a Hamming weight $\geq 4$.

The binary assignment vector may have an entry of a "1" (or "o") whenever a client is part of the respective client group. If the assignment vectors only span vectors with a Hamming weight $\geq 2$, then the server may at most determine the aggregate of the data of two clients based on linear combinations of the group data aggregates. Preferably, the Hamming weight of the vectors spanned by the assignment vectors is $\geq 3$ or $\geq 4$ to increase the privacy of the client's data in the method.

The overlap should be large enough, such that malicious clients may be reliably identified, but small enough to avoid ambiguity in the identification of the malicious clients. The inventors found that a suitable assignment may be equivalent to the assignment according to a parity check matrix of an error correction code.

In preferred embodiments, an assignment of clients to respective client groups is mathematically equivalent to a binary assignment matrix, wherein the binary assignment matrix corresponds to a parity check matrix of an error correction code, in particular of a BCH code, a binary Golay code, a Hamming code, or a code on graphs, such as an LDPC code or a polar code.

The rows of the assignment matrix may be considered assignment vectors to respective client groups, wherein each client group is associated with one row. Using the parity check matrix as an assignment matrix may result in an efficient distribution of the clients between groups with a suitably large overlap, while also conforming to the requirement defined above.

The assignment matrix may be a parity-check matrix of a binary code of a given size such that the minimum Hamming distance is maximized, under the condition that the identification of malicious nodes meets a given threshold criterion. For example, the assignment matrix may be a parity-check matrix of a binary code that has large minimum Hamming distance, such that the identification of malicious nodes is comparatively good. Moreover, the assignment matrix should be the generator matrix of a binary code with a large minimum Hamming distance $H_{d1}$, e.g. $H_{d1} \geq 2$, $H_{d1} \geq 3$, or $H_{d1} \geq 4$, in order to achieve a comparatively high level of privacy.

The group data aggregates can be obtained by aggregating the masked data portions by a server, and suspicious client groups may be identified based on the quality metric for each of the group data aggregates.

In preferred embodiments, wherein the method comprises determining a relative quality metric of the quality metric for one of the group data aggregates with respect to a quality metric of one of the other group data aggregates and/or with respect to a quality metric for validation data (14) maintained by the server (16), wherein the relative quality metric is in particular based on a highest value of a quality metric for one of the group data aggregates and/or based on a variance of a quality metric for the group data aggregates.

For example, the server may have access to a validation set of training data and may train the global model based on the validation set. A relative quality metric for the training result of the server may subsequently be used to determine a quality of the group data aggregates, e.g. by determining a difference metric between the training result of the server and the group data aggregates. As another example, the group data aggregates may be evaluated based on an accuracy of predicting a correct output for the validation set of training data as the quality metric, and group data aggregates failing to achieve a quality metric threshold, e.g. based on a value of the accuracy based on another group data aggregate, such as the highest accuracy obtained using one of the group data aggregates, may be labeled as suspicious client groups. For example, a relative quality metric may be the accuracy for the group data aggregate divided by the highest accuracy obtained with one of the group data aggregates, and the quality metric threshold may be a relative value, such as 95% of the highest accuracy. The labeling of a client group may be implemented by a testing algorithm, which may be based on pre-defined thresholds for the quality metric, or may be implemented by a neural network trained to detect suspicious client groups based on the quality metric of the group data aggregate. In some embodiments, the quality metric is a probability for the client group comprising a malicious client.

In some embodiments, the quality metric is based on an accuracy of a machine learning model based on the group data aggregate.

Based on the quality metric for the client groups, a decoding algorithm may estimate, for each client, a probability of being a malicious client. As a simple example, if client A is part of all suspicious client groups, but the other clients of these suspicious client groups are also part of client groups, which were not labeled as suspicious, client A is likely a malicious client. The decoding algorithm may be implemented by a neural network or may be based on a decoding algorithm used for error correction in communication networks.

In preferred embodiments, estimating the set of malicious clients is based on an error correction code decoding algorithm, in particular the BCJR algorithm, the Viterbi algorithm, or a message passing decoding algorithm, for determining malicious clients based on a most likely origin of a quality defect in the plurality of group data aggregates influencing the quality metric.

The decoding algorithm may allow for a usage of noisy testing strategy, where the test outcome, i.e. whether the client group contains a malicious client, is not always correct. However, the skilled person will appreciate that several other estimation algorithms may be used for leveraging the overlap of the client groups for the task of determining the malicious clients.

In preferred embodiments, the server requests a plurality of copies of the data from the clients, wherein each copy of the data is masked based on a different mask associated with a respective different client group, and the plurality of copies of the data from each client forms the plurality of masked data portions.

The transmission and masking of multiple copies per client may increase a communication cost of the method, but may increase the speed at which the method may determine the malicious clients. The requesting of multiple copies of the data per client may be performed for multiple rounds of aggregating the data, and a client may be assigned to multiple client groups in multiple rounds of the aggregating, such as to prevent a malicious client from pretending to be a benign client, when multiple copies of his data are requested. In some examples, the clients may be assigned to a plurality of partially overlapping client groups for an initial round of training, and the benign clients may be asked to retransmit their data after the malicious clients have been exempted from the aggregation scheme in a retransmission round, where the retransmission round may or may not feature assignment of clients to partially overlapping client groups and decoding of malicious clients.

The skilled person will appreciate that not all clients need to be assigned to multiple client groups at each iteration, but the partially overlapping client groups may only feature a subset of clients which are part of multiple client groups. A malicious client, which is only part of a single client group, may still be identified as being malicious in a suspicious client group, e.g. if all the other clients in the client group are also part of at least one client group that was deemed benign based on the respective group aggregates.

In some embodiments, the clients are grouped into different client groups for different requests of data from the plurality of clients, and estimating the set of malicious clients is based on a plurality of masked data portion received from the clients for the different requests of data. The data for the different requests may be different, e.g. based on different rounds of training a machine learning model, and the malicious clients may be identified after a plurality of communication rounds.

According to a second aspect, the invention relates to a computer-implemented method for secure aggregation of data from a plurality of clients. The method comprises receiving a request for data at a client, and transmitting a plurality of masked data portions from the client to a server, wherein the plurality of masked data portions are each associated with a different client group of a plurality of client groups. Each of the masked data portions is masked with a different mask, and aggregating the masked data portions of each client in a client group unmasks an aggregate of underlying data of the masked data portions for obtaining a group data aggregate.

The method according to the second aspect may be executed by a client participating in an aggregating method, e.g. mediated by a system implementing the method of the first aspect, such as a server.

In preferred embodiments, the plurality of masked data portions each correspond to the same underlying data, wherein the underlying data is masked with a different mask based on the respective client group.

In preferred embodiments, the method further comprises obtaining a masking key for each of the plurality of overlapping client groups, and masking the data with different masking keys to obtain the plurality of masked data portions.

According to a third aspect, the invention relates to a system for secure aggregation of data from a plurality of clients. The system is configured to request data from the plurality of clients, and receive a plurality of masked data portions from the plurality of clients, wherein the plurality of clients are grouped into a plurality of partially overlapping client groups, and each masked data portion is associated with one of the client groups. The system is further configured to aggregate the masked data portions of each client group to obtain a plurality of group data aggregates, wherein each group data aggregate is associated with a respective client group, and estimate, based on a quality metric for each of the plurality of group data aggregates, a set of malicious clients of the plurality of clients. The system is further configured to determine a benign data aggregate based on a remaining plurality of benign clients, wherein the benign clients do not form part of the malicious clients.

The system may implement the method according to the first aspect or the second aspect or any combination of their embodiments. In particular, the system according to the third aspect may also benefit from any feature of the preferred embodiments of the first aspect or the second aspect.

The system may be controlled using a processing system, which may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The system may comprise multiple servers for executing the respective steps, e.g. a server for handling requests and receiving of masked data portions, a server for determining which group aggregate is suspicious, a server for estimating, based on the group aggregates, which clients are malicious, and a server for updating and distributing a machine learning model. However, the processing steps may equally be executed by a single server or a server system, which may distribute internal computations over multiple processing devices.

According to a fourth aspect, the invention relates to a non-transitory medium comprising machine-readable instruction, which, when executed by a processing system, implement a method according to the first aspect and/or the second aspect and/or a system according to the third aspect.

DETAILED DESCRIPTION OF EMBODIMENTS

The features and numerous advantages of the methods and system according to the present invention will best be understood from a detailed description of preferred embodiments with reference to the accompanying drawings, in which:

Fig. 1 schematically illustrates a system for secure aggregation of data from a plurality of clients according to an example;

Fig. 2 illustrates a flow diagram of a method for secure aggregation of data from a plurality of clients according to an example;

Fig. 3 schematically illustrates a flowchart of a group testing strategy as part of secure aggregation of data from a plurality of clients according to an example;

Fig. 4A-C schematically illustrates different examples of assignments of clients to client groups for group testing;

Fig. 5A-D schematically illustrates simulation results of a secure aggregation strategy of data from a plurality of clients according to an example; and

Fig. 6 schematically illustrates a flowchart of a method for secure aggregation of data from a plurality of clients according to another example.

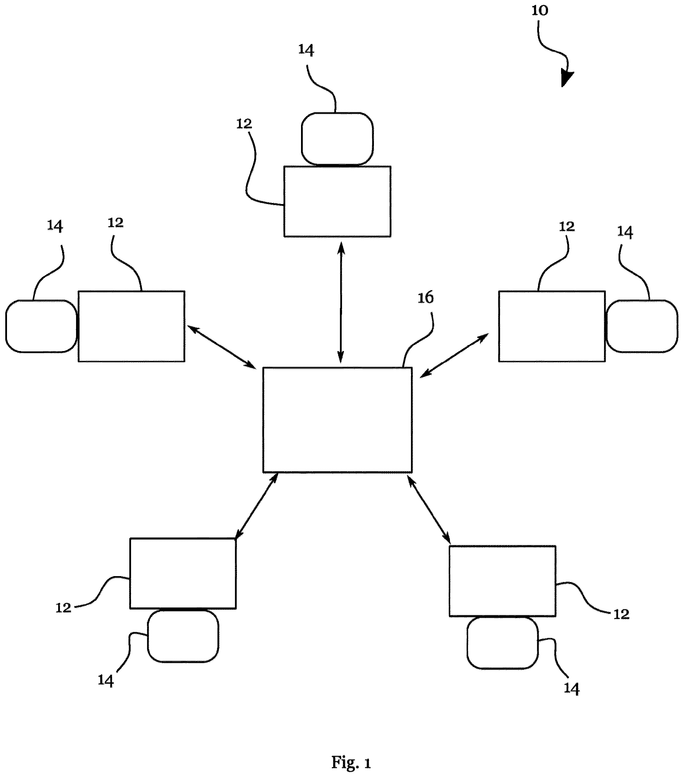

Fig. 1 schematically illustrates an example of a system 10 for aggregating data obtained from a plurality of clients 12. Each client 12 may have sensitive data 14, which the client 12 may not want to share openly, but which they may be willing to share in a secure aggregation scheme. A server 16 is connected to each of the clients 12, e.g. over a communication channel (as illustrated with double-headed arrows in Fig. 1), and can request sensitive data 14 from the clients 12.

The clients 12 may mask their sensitive data 14 based on a shared secret which is shared with at least one other client 12 to obtain a masked data portion, and the client 12 may share the masked data portion with the server 16. The secret may be shared directly with one of the other clients 12, or may be shared through communication with the server 16. The other clients 12 may equally mask their sensitive data 14 based on the shared secret to obtain respective masked data portions, such that aggregation of the masked data portions of all clients 12 cancels the masks from the aggregate of the sensitive data 14.

The server 16 may receive the masked data portions and may aggregate the masked data portions to obtain a group data aggregate, as an aggregate of the sensitive data 14 of all the clients 12, wherein the masks of the masked data portions may cancel in the aggregation process.

Usually, the aggregation process comprises a summing of the masked data portions, and the masks of the masked data portions of two clients 12 may comprise secrets of opposite sign added to the respective sensitive data 14, such that, when the masked data portions of the two clients 12 are added, the secrets of opposite sign cancel, and the sum of the sensitive data 14 of the clients 12 can be returned. Each masked data portion may be masked with a plurality of secrets shared with different clients 12, such that only the sum of sensitive data 14 of multiple clients 12 may be revealed by the server 16.

In the following, the sensitive data will be considered to be a training result of training a machine learning model by each of the clients 12, and the clients 12 may share the training result, e.g. a gradient and/or a trained machine learning model, with the server 16 by masking the training result with a mask and sending the masked training result as a masked data portion to the server 16. The server 16 may aggregate the masked data portions of multiple clients 12 to obtain an aggregate training result and may update a global machine learning model based on the aggregate training result.

The masking of the training result according to the secure aggregation scheme outlined above may prevent direct access to the training result and may therefore protect the privacy of training data of the client 12 used to obtain the training result. However, the secure aggregation scheme may be susceptible to malicious users, which intentionally or unintentionally do not meet a data quality criterion for the updates to the global machine learning model, such that the training process of the global machine learning model may be compromised.

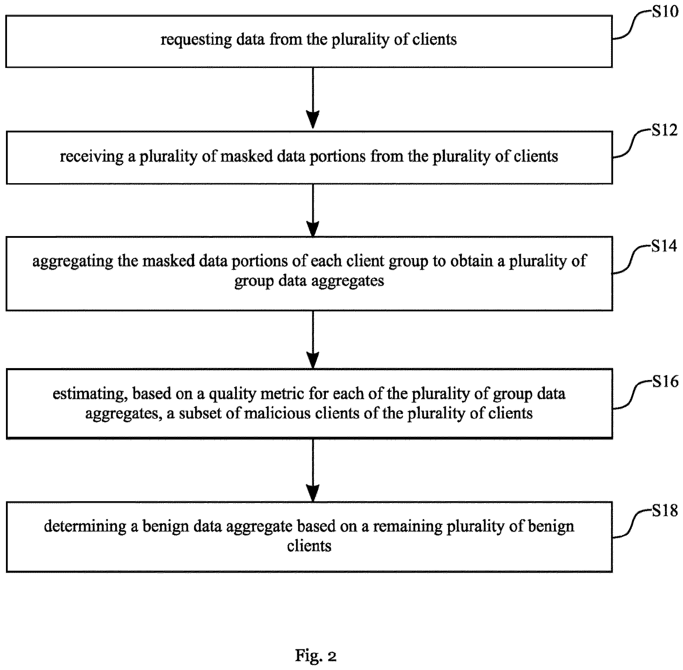

Fig. 2 illustrates an example of a computer-implemented method for secure aggregation of data from a plurality of clients 12, which may be implemented in a system 10 shown in Fig. 1, e.g. by the server 16. The method comprises requesting data from the plurality of clients 12 (S10), and receiving a plurality of masked data portions from the plurality of clients 12 (S12), wherein the plurality of clients 12 are grouped into a plurality of partially overlapping client groups, and each masked data portion is associated with one of the client groups. The method further comprises aggregating the masked data portions of each client group to obtain a plurality of group data aggregates (S14), wherein each group data aggregate is associated with a respective client group. The method then comprises estimating, based on a quality metric for each of the plurality of group data aggregates, a subset of malicious clients of the plurality of clients 12 (S16), and determining a benign data aggregate based on a remaining plurality of benign clients (S18), wherein the benign clients do not form part of the malicious clients.

The clients 12 may be assigned to respective client groups 12 by the server 16, and each client group may implement a secure aggregation protocol among its clients 12 to share a group data aggregate with the server 16 by means of masked data portions generated by each client 12. The aggregation of the masked data portions of all clients 12 of the respective client group may at least partially remove the masking from the group data aggregate, such that the quality metric for the group data aggregate may be determined by the server 16.

The server 16 may subsequently determine, based on the quality metric for the group data aggregates, whether a group data aggregate meets or does not meet a quality metric threshold. If the group data aggregate does not meet the quality metric threshold, the client group may be labeled as a suspicious client group. Based on the suspicious client groups identified by the server 16, the server 16 can estimate which client 12 is potentially a malicious client, based on the assignment of the clients 12 to partially overlapping client groups.

Any identified malicious client may be exempted from future rounds of the secure aggregation scheme, such that their influence on the secure aggregate can be prevented. For example, the training may continue only based on the benign clients. The group data aggregates, which met the quality metric threshold, may be used to determine the benign data aggregate. Alternatively, the benign clients may be asked to retransmit their data to the server 16, e.g. again using the method illustrated in Fig. 2 or using a simple secure aggregation scheme, which may not have partially overlapping client groups, to obtain the benign data aggregate.

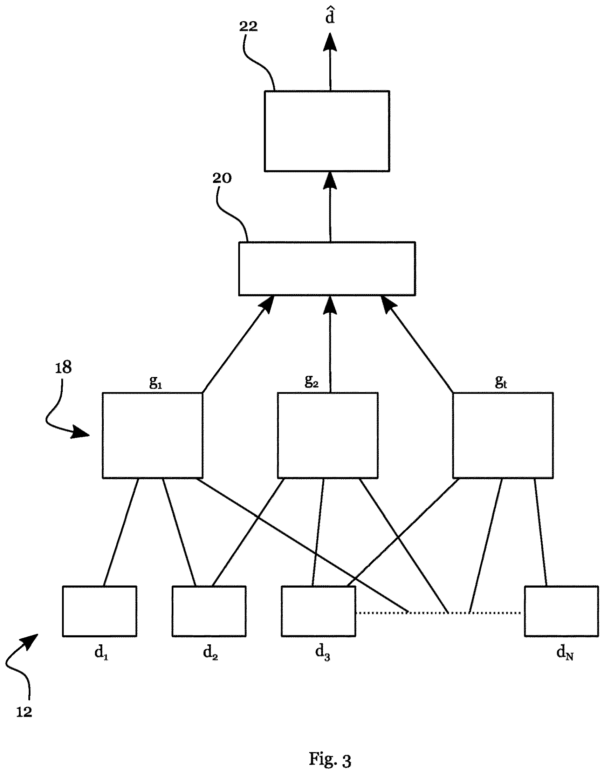

Fig. 3 illustrates an example of a flowchart of an aggregation and testing scheme for data from a plurality of clients 12 in a federated learning setup. In the illustrated example, there are N clients 12 and one central server 16, which is tasked to obtain an aggregate of the data of benign clients, in the presence of a number of malicious clients among the clients 12. Let d be the defective vector, a binary vector of size N, where each entry shows that the client is malicious or not, i.e., $d_i = 1$ if client i is malicious for $i \in \{1, ... , N\}$ and $d_i = 0$ otherwise. The goal of the server 16 would then be to find out an estimate of the defective vector $\hat{d}$, where ideally $\hat{d} = d$.

The server 16 can pool the clients into a number of t partially overlapping client groups 18, $g_1$-$g_t$, and may request the clients 12 of each client group 18 to provide masked data portions with a secure aggregation scheme with the other members of that client group 18 (wherein solid lines illustrate membership of one of the clients in a respective group in Fig. 3). The clients 12 train a common global model, which may be obtained from the server 16 and may share the training results as updates to the global machine learning model through the secure aggregation scheme. For each client group 18, of which the client 12 is a member, the client 12 may generate a masked data portion, which is masked based on a secure aggregation algorithm within the client group 18, and may share the masked data portion with the server 16.

The server 16 may receive and aggregate the masked data portions of all clients 12 and may obtain group data aggregates for each client group 18, which may each describe aggregated updates to the global machine learning model. The group data aggregates may subsequently be tested in a testing module 20, which may classify the client group 18 as suspicious (malicious) or not, according to a testing strategy.

Identifying the malicious clients may involve a testing scheme, which may identify suspicious client groups based on the quality metric for the group data aggregates, which may be based on a quality criterion for the training data of each client 12. For example, the quality criterion may be an accuracy of the updated global model based on the training results from the client, and the quality metric may be based on the accuracy of the global model updated based on the aggregated training data from the plurality of clients. The client group may be identified as a suspicious client group, if the accuracy of the global model updated based on the aggregated training data is below an accuracy threshold, which may be based on the aggregated training results of other client groups or of the server 16. As another example, the quality criterion may be a difference of the training results obtained by the client 12 from training results obtained by other clients 12 and/or the server 16, and the quality metric may be based on the difference of the group data aggregate of the client group from the group data aggregate of other client groups and/or a corresponding training result obtained by the server 16.

After the testing of the client groups 18 is performed, the server 16 can estimate (decode) the malicious clients in a decoding module 22, by using an estimation algorithm, for example inspired from error-correction code decoding algorithms for group testing. In some examples, the decoding algorithm may be a maximum likelihood estimation algorithm or a maximum a posteriori probability estimation algorithm, e.g. the forward-backward algorithm or BCJR algorithm.

After the server 16 performs the testing strategy and the decoding, the server 16 obtains the estimate of the defective vector $\hat{d}$. Since the client groups 18 have an overlap on their respective members, it is possible to estimate $\hat{d}$ by observing the result of the tests performed over the client groups 18. The decoding may be based on a quality metric associated with each of the group data aggregates and/or based on a labelling of the client groups 18 as "suspicious" or "likely benign". After obtaining the estimate $\hat{d}$, the server 16 has an estimation on which client 12 is malicious and which is not. In some embodiments, the clients 12 that are considered as not malicious may be contacted and asked for a retransmission of their updates to the global model in a secure way by using secure aggregation.

This retransmission can introduce an overhead in communication, but the simulations of the inventors show that implementing the method only once as part of a federated learning scheme (at one communication round only) can already improve the accuracy of the global machine learning model significantly. The inventors found that the method is compatible with any testing strategy on aggregated updates and the pooling process can be optimized for any values of N and t.

The skilled person will appreciate that the method is not limited to the deduction of the presence of at least one malicious client in a client group 18, but that the method also allows the usage of quantitative group testing, where the testing strategy outputs the estimated number of malicious nodes in each client group 18.

The assignment to the partially overlapping client groups 18 should maintain the privacy of the updates submitted by the clients 12, but allow for a good identification of malicious clients 12, i.e. with low ambiguity in the estimated vector of malicious clients, preferably with a low false positive rate (false alarm), i.e. incorrectly labelling a benign client as malicious, and with a low rate of false negatives, i.e. incorrectly labelling a malicious client as benign.

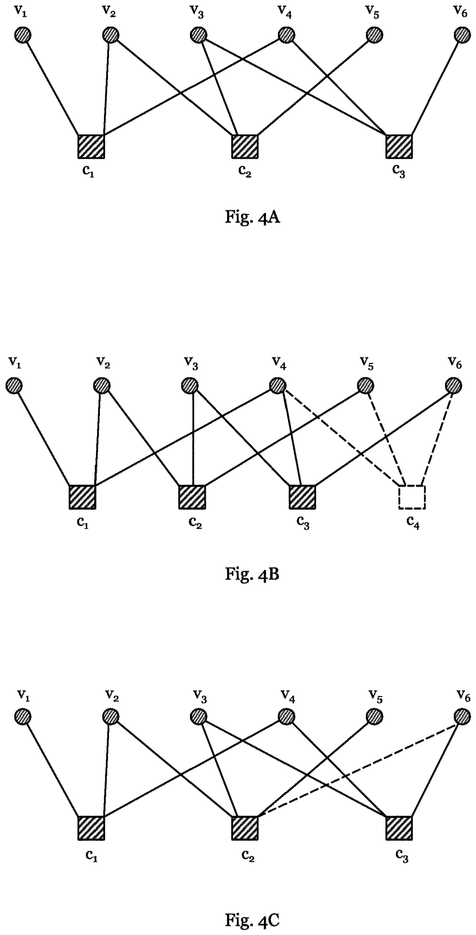

Fig. 4A illustrates an example of an assignment of six clients 12 to three client groups 18, represented by a bipartite graph consisting of N variable nodes $v_1, \ldots, v_6$ corresponding to the N=6 clients, and t constraint nodes $c_1, \ldots, c_3$, corresponding to the t=3 client groups 18. An edge is drawn if a client 12 participates in the respective client group 18. The illustrated assignment of clients 12 to client groups 18 can be described by a binary matrix, called assignment matrix $A = (a_{i,j})$, $i \in [t]$, $j \in [A]$, where $a_{i,j} = 1$ if client $j$ participates in client group $i$ and $a_{i,j} = 0$ otherwise.

The assignment matrix preferably optimizes a trade-off between the identification capabilities and the privacy guarantees of the method. As an example, the bipartite graph corresponding to the illustrated scenario with six clients 12 and three client groups 18 is given by the assignment matrix

$$A = \begin{pmatrix} 1 & 1 & 0 & 1 & 0 & 0 \\ 0 & 1 & 1 & 0 & 1 & 0 \\ 0 & 0 & 1 & 1 & 0 & 1 \end{pmatrix}, \tag{1}$$

wherein rows are assignment vectors of each client 12 to one of the client groups 18, i.e. a "one" at the first entry in the row indicates that the "first" client $v_1$ participates in the "first" group $c_1$.

Assume that out of 6 clients, only 1 client is malicious and one uses a good testing strategy (e.g. the test outcome of checking that a client group 18 contains a malicious client is always correct), using a group testing approach with an assignment matrix as in Eq. (1), identification will always be successful. For example, if the group data aggregate of client group $c_2$ is the only one that tests positive, this means that either client 12 $v_2$, $v_3$ or $v_5$ is malicious. However, clients $v_2$ and $v_3$ are members of client group $c_1$ and $c_3$, respectively, and since their group data aggregates tested negative, this means that those two clients 12 should be classified as benign. Then, the only option left is that client $v_5$ is malicious. Similarly, it can be checked that perfect identification (no false alarm and no miss-detection) is achieved if any other client 12 is solely malicious.

Fig. 4B illustrates another example of an assignment of six clients 12 to client groups 18, wherein, compared to the example of Fig. 4A, a fourth client group $c_4$ has been added (additional edges/group with respect to Fig. 4A shown in dashed lines). The additional client group $c_4$ can be described by adding another row to the assignment matrix, i.e.

$$A_1 = \begin{pmatrix} 1 & 1 & 0 & 1 & 0 & 0 \\ 0 & 1 & 1 & 0 & 1 & 0 \\ 0 & 0 & 1 & 1 & 0 & 1 \\ 0 & 0 & 0 & 1 & 1 & 1 \end{pmatrix}, \tag{2}$$

Using the assignment matrix $A_1$, the server observes four group data aggregates of three clients 12 each. However, due to the large intersection, the privacy is not the same as when using A as an assignment matrix. For example, when the group data aggregates $c_1, \ldots, c_4$ are the sums of the training data by the clients 12 in the respective client group 18, the server 16 can do the following operation over the group data aggregates $c_1 - c_2 + c_3 - c_4$ (the sum of group data aggregates of client groups $c_1$ and $c_3$ minus the group data aggregates of client groups $c_2$ and $c_4$) and obtains $v_4 - 2v_5$ (the update of client $v_4$ minus twice the update of client $v_5$), which may partially reveal the data of the clients 12.

In terms of performance of identifying malicious clients, simulation results of the inventors showed that the pooling defined by $A$ has to sacrifice 24.33% of benign clients in order to identify all the malicious clients, while the pooling assigned by $A_1$ only (incorrectly) classifies 17.38% of the benign clients as malicious. Clearly, increasing the number of tests/client groups 18 can improve the performance of the method, but on the other hand it may decrease the privacy of the clients 12 (as the server 16 can partly revert the aggregation due to the larger intersection).

Mathematically, if the assignment matrix spans vectors, whose Hamming weight (number of non-zero entries) is 1, then (at least) one client update can be revealed by linearly combining the aggregates that the server observes. Indeed, it can be checked that the matrix A in Eq. (1) only spans vectors of Hamming weight $\geq 3$.

Preferably, the assignment vectors only span vectors with a Hamming weight $\geq 2$, in particular with a Hamming weight $\geq 3$, preferably with a Hamming weight $\geq 4$, to maintain a privacy of the client's data.

Fig. 4C illustrates another example of an assignment of six clients 12 to three client groups 18, but with a slightly modified assignment with respect to the example illustrated in Fig. 4A (additional edge illustrated with a dashed line). The additional edge introduces the participation of client $v_6$ in client group $c_2$, such that the assignment matrix becomes

$$A_2 = \begin{pmatrix} 1 & 1 & 0 & 1 & 0 & 0 \\ 0 & 1 & 1 & 0 & 1 & 1 \\ 0 & 0 & 1 & 1 & 0 & 1 \end{pmatrix}, \tag{3}$$

Considering noiseless tests and only 1 malicious client out of 6 clients, a group testing scheme using $A_2$ as an assignment matrix, does not always provide perfect identification. For example, if either client $v_3$ or client $v_6$ is malicious, the outcome of the test over the group data aggregates is the same. If a decoder observes that the group data aggregates of the client group $c_2$ and $c_3$ test positive and the one of client group $c_1$ tests negative, it will classify both client $v_3$ and $v_6$ as malicious, even though only one might be malicious. Thus, if the overlap of the client groups 18 becomes too large at a fixed number of client groups 18, the performance of a testing strategy may degrade due to ambiguity.

For optimizing the performance of the group testing scheme, it is recommended to use as an assignment matrix the parity-check matrix of error-correction codes with good error correction capabilities (such as BCH codes), whose dual code also has a large enough minimum distance. Preferably, the assignment matrix is the parity-check matrix of a binary code that has large minimum Hamming distance, such that the performance of identifying malicious nodes is good. For example, the set of assignment vectors defined by the assignment matrix for each client group 18 may have a minimum Hamming distance $H_{d1} \geq 2$, $H_{d1} \geq 3$, or $H_{d1} \geq 4$.

Moreover, the assignment matrix may be the generator matrix of a binary code with a large minimum Hamming distance $H_{d2}$, e.g. $H_{d2} \geq 2$, $H_{d2} \geq 3$, or $H_{d2} \geq 4$, in order to achieve a pleasant level of privacy. The large minimum Hamming distance may ensure that the assignment vectors do not have that much overlap with each-other.

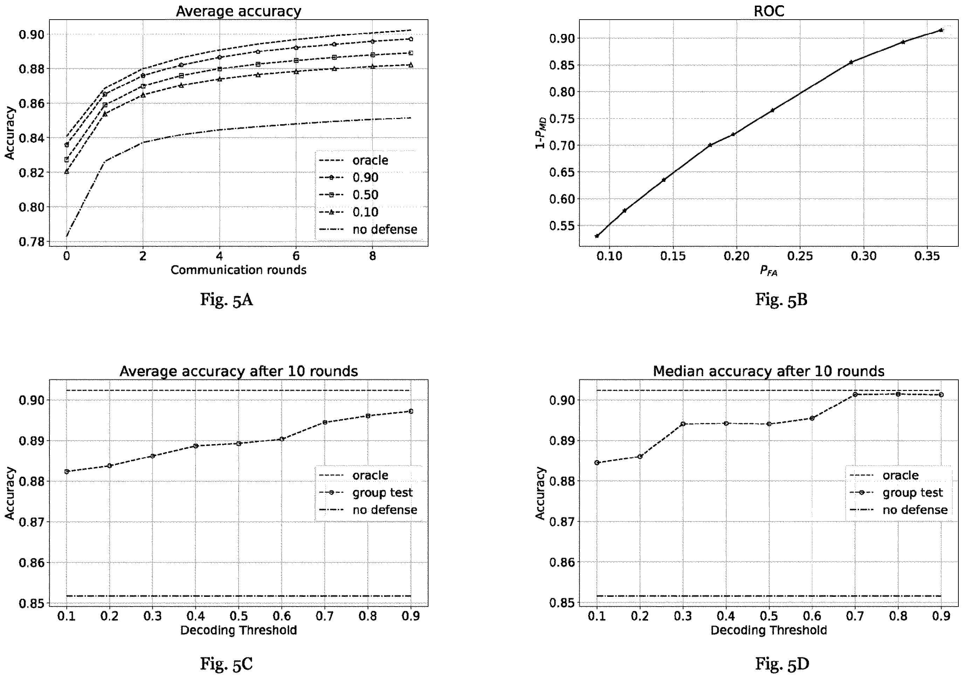

Fig. 5A-D illustrate the results of simulations of federated learning examples, implementing a group testing scheme similar to the method shown in Fig. 2, based on a system 10 with one central server 16 and 15 clients 12. The system 10 is tasked to train a machine learning model for identifying handwritten digits from images, wherein training data for the MNIST dataset is used, which consists of 60000 handwritten digits. The training dataset is split into a validation dataset of size 3000, which is assigned to the server 16 for the testing strategy, and a training set, wherein the remaining 57000 images of the training set are split between the 15 clients 12 in a homogeneous way. The machine learning is done using the federated averaging strategy. The clients are assigned to 8 client groups 18, where each client group 18 has 4 clients 12. The assignment matrix $A_{BCH}$ used for pooling is the parity-check matrix of a BCH error correction code of length 15 and dimension 7 (which yields 8 client groups 18) and it is given in Eq. (4):

$$A_{BCH} = \begin{pmatrix} 1 & 1 & 0 & 1 & 0 & 0 & 0 & 1 & 0 & 0 & 0 & 0 & 0 & 0 & 0 \\ 0 & 1 & 1 & 0 & 1 & 0 & 0 & 0 & 1 & 0 & 0 & 0 & 0 & 0 & 0 \\ 0 & 0 & 1 & 1 & 0 & 1 & 0 & 0 & 0 & 1 & 0 & 0 & 0 & 0 & 0 \\ 0 & 0 & 0 & 1 & 1 & 0 & 1 & 0 & 0 & 0 & 1 & 0 & 0 & 0 & 0 \\ 0 & 0 & 0 & 0 & 1 & 1 & 0 & 1 & 0 & 0 & 0 & 1 & 0 & 0 & 0 \\ 0 & 0 & 0 & 0 & 0 & 1 & 1 & 0 & 1 & 0 & 0 & 0 & 1 & 0 & 0 \\ 0 & 0 & 0 & 0 & 0 & 0 & 1 & 1 & 0 & 1 & 0 & 0 & 0 & 1 & 0 \\ 0 & 0 & 0 & 0 & 0 & 0 & 0 & 1 & 1 & 0 & 1 & 0 & 0 & 0 & 1 \end{pmatrix} \qquad (4)$$

It can be shown that the assignment matrix $A_{BCH}$ spans only vectors of Hamming weight $\geq 4$ and thus the framework provides the same privacy guarantees as a full secure aggregation with four clients 12 or a secure aggregation setting with non-overlapping client groups 18 each having four clients 12.

The method is simulated in an experiment, where the testing strategy is done by evaluating the performance of each client group 18 on the validation dataset that the server 16 has (note that the validation dataset is not used for learning). The client group 18 that has the highest accuracy is classified as non-malicious and the client groups 18 whose accuracy is lower than 96% of the best client group 18 are classified as malicious. It is assumed that the tests of identifying a suspicious/benign client group 18 are wrong with a probability 0.05. The accuracy is evaluated from the test dataset, but could also be evaluated from the validation data set, and the machine learning simulation is performed 100 times with four randomly assigned malicious clients for 10 communication rounds each. Based on the identified suspicious/benign client groups 18, the malicious clients are identified using the BCJR algorithm, wherein the experiment is performed for different BCJR threshold parameters, which is a decoder parameter that may select a compromise between rate of false detection and false alarm.

The experiment is compared to an optimally performing method, in which the server 16 is "genie-aided", i.e. has an "oracle", which knows which client 12 is malicious with prefect accuracy, and therefore can train the global machine learning model based solely on the updates of the benign clients, and to a "no defense" strategy, in which no detection of the malicious clients is attempted, i.e. in which the malicious clients contribute fully to the training of the global machine learning model.

In the experiment, the group testing scheme based on the method of Fig. 2 is used only in the first round of communication to estimate which of the clients 12 are malicious clients. Subsequently, the method proceeds with the machine learning only based on the remaining "benign" clients, which are asked to retransmit their data.

The upper left plot in Fig. 5A shows the average accuracy versus communication round for the server 16 using the "oracle", using a "no defense" strategy, and using the group testing strategy with different BCJR (Decoder) thresholds. It can be observed that group testing strategy performs very similar to the "oracle".

The upper right plot in Fig. 5B shows the ROC curve, which describes the trade-off between the probability of successful detection of malicious node 1 - $P_{MD}$ and the probability of false alarms $P_{FA}$ (benign nodes misclassified as malicious), wherein a higher BCJR (Decoder) threshold increases the detection probability 1 - $P_{MD}$.

The lower plots in Fig. 5C and 5D show the average and median accuracy, respectively, versus the BCJR threshold and the performance of the "oracle" strategy and the "no defense" strategy. In this experiment, the accuracy increases with increasing BCJR (Decoder) threshold, which the inventors explain with the comparatively large data set available to each client 12 and the homogenous distribution of the training data in the simulations. In other words, since the data set available to each client 12 is large enough, it is optimal in the experiment to maximize a probability of detecting malicious at the expense of sacrificing benign clients, for the task of maximizing the accuracy of the machine learning model. However, if the available amount of training data was smaller, a different (lower) BCJR (Decoder) threshold may potentially be better.

It is noted that, in the above-described example, an intentionally malicious client may pretend to be benign in the first communication round, only to introduce false updates in subsequent communication rounds. Thus, it may be advantageous to test the clients 12 in each communication round, or to change the group assignment in each communication round.

In some examples, each client 12 may be part of the same number of client groups 18, such that the group data aggregates may be used directly for training the global machine learning model without weighting the data updates from the clients 12 differently. Alternatively, the clients 12 may be informed of a scaling factor for their data, such that all machine learning model updates are weighted equally when training the global machine learning model based on a subset of the group data aggregates from which suspicious group data aggregates have been removed.

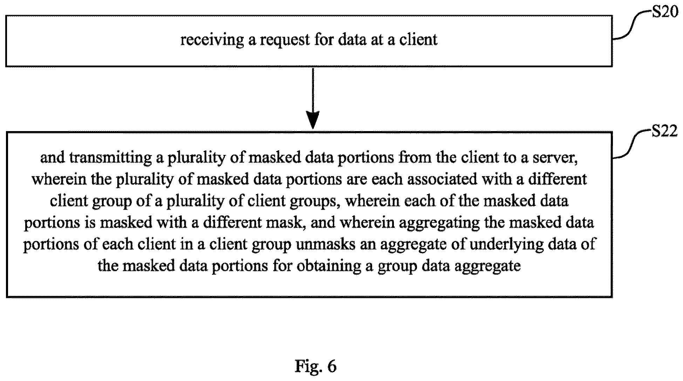

Fig. 6 illustrates an example of a computer-implemented method for secure aggregation implemented by a client 12, e.g. participating in the method illustrated in Fig. 2. The method comprises receiving a request for data at a client 12 (S20), and transmitting a plurality of masked data portions from the client 12 to a server 16 (S22), wherein the plurality of masked data portions are each associated with a different client group 18 of a plurality of client groups 18.

Each of the masked data portions is masked with a different mask, and aggregating the masked data portions of each client 12 in a client group 18 unmasks an aggregate of underlying data of the masked data portions for obtaining a group data aggregate.

Each of the masked data portions may be based on the same underlying data, e.g. the same training result, and the different mask may be obtained based on different shared secrets, which were shared with the other clients 12 of the respective client groups 18. Generally, any secret sharing strategy may be used. For example, the server 16 may mediate the secret sharing, or the clients 12 may directly share their secrets with the other clients 12 in their client group 18. The assignment to client groups 18 may be implemented by the server 16, and each client 12 may be informed, by the server 16, of the secrets shared with them based on a public key of the client 12.

In the preceding discussion, all of the client groups 18 were partially overlapping client groups 18. However, the skilled person will appreciate that the method/system may also be implemented with client group assignments, in which only a portion of the client groups are partially overlapping client groups 18, and the remaining client group(s) 18 may not overlap with the other client groups 18 in at least one client 12. For example, clients 12 may be assigned to partially overlapping client groups 18 based on a (low) trust rating of the clients 12, in some embodiments. Other client 12, which may have a trust rating above a trust threshold, may be exempted from the testing scheme based on partially overlapping client groups 18, and may, e.g., provide reference training results as a baseline to assess the quality metric of the group data aggregates obtained from the partially overlapping client groups 18.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | system |
| 12 | client |
| 14 | sensitive data |
| 16 | server |
| 18 | client group |
| 20 | testing module |
| 22 | decoding module |

**Claims**

1. A computer-implemented method for secure aggregation of data (14) from a plurality of clients (12), wherein the method comprises:

   requesting data (14) from the plurality of clients (12);
   receiving a plurality of masked data portions from the plurality of clients (12), wherein the plurality of clients (12) are grouped into a plurality of partially overlapping client groups (18), and each masked data portion is associated with one of the client groups (18);
   aggregating the masked data portions of each client group (18) to obtain a plurality of group data aggregates, wherein each group data aggregate is associated with a respective client group (18);
   estimating, based on a quality metric for each of the plurality of group data aggregates, a set of malicious clients of the plurality of clients (12);
   determining a benign data aggregate based on a remaining plurality of benign clients, wherein the benign clients do not form part of the malicious clients.

2. The method of claim 1, wherein each client (12) masks a training result of training a machine learning model by the client (12), and the method comprises receiving the masked training result as a masked data portion.

3. The method of any one of the preceding claims, wherein the masked data portions are masked with a mask based on group-based or pairwise masking by clients (12) in the group, such that the mask is cancelled by aggregating all of the masked data portions.

4. The method of any one of the preceding claims, wherein aggregating the masked data portions of each client group (18) comprises summing the masked data portions of all clients (12) of a client group (18).

5. The method of any one of the preceding claims, wherein the plurality of data aggregates are at least partially unmasked by the aggregating of all masked data portions of the client group (18).

6. The method of any one of the preceding claims, wherein a grouping of the clients (12) into respective client groups (18) is mathematically equivalent to an assignment according to a plurality of binary assignment vectors, wherein each assignment vector defines an assignment of clients (12) to one of the client groups (18), and wherein the assignment vectors only span vectors with a Hamming weight $\geq 2$, in particular with a Hamming weight $\geq 3$, preferably with a Hamming weight $\geq 4$.

7. The method of any one of the preceding claims, wherein an assignment of clients (12) to respective client groups (18) is mathematically equivalent to a binary assignment matrix, wherein the binary assignment matrix corresponds to a parity check matrix of an error correction code, in particular of a BCH code, a binary Golay code, a Hamming code, or a code on graphs, such as an LDPC code or a polar code.

8. The method of any one of the preceding claims, wherein the method comprises determining a relative quality metric of the quality metric for one of the group data aggregates with respect to a quality metric of one of the other group data aggregates and/or with respect to a quality metric for validation data (14) maintained by the server (16), wherein the relative quality metric is in particular based on a highest value of a quality metric for one of the group data aggregates and/or based on a variance of a quality metric for the group data aggregates.

9. The method of any one of the preceding claims, wherein estimating the set of malicious clients is based on an error correction code decoding algorithm, in particular the BCJR algorithm, the Viterbi algorithm, or a message passing decoding algorithm, for determining malicious clients based on a most likely origin of a quality defect in the plurality of group data aggregates influencing the quality metric.

10. The method of any one of the preceding claims, wherein the server (16) requests a plurality of copies of the data (14) from the clients (12), wherein each copy of the data (14) is masked based on a different mask associated with a respective different client group (18), and the plurality of copies of the data (14) from each client (12) forms the plurality of masked data portions.

11. A computer-implemented method for secure aggregation of data (14) from a plurality of clients (12), wherein the method comprises:

   receiving a request for data (14) at a client (12);
   transmitting a plurality of masked data portions from the client (12) to a server (16), wherein the plurality of masked data portions are each associated with a different client group (18) of a plurality of client groups (18);
   wherein each of the masked data portions is masked with a different mask, and
   wherein aggregating the masked data portions of each client (12) in a client group (18) unmasks an aggregate of underlying data of the masked data portions for obtaining a group data aggregate.

12. The method of claim 11, wherein the plurality of masked data portions each correspond to the same underlying data, wherein the underlying data is masked with a different mask based on the respective client group (18).

13. The method of claim 11 or 12, wherein the method further comprises obtaining a masking key for each of the plurality of overlapping client groups (18), and masking the data (14) with different masking keys to obtain the plurality of masked data portions.

14. A system (10) for secure aggregation of data (14) from a plurality of clients (12), wherein the system (10) is configured to:

   request data (14) from the plurality of clients (12);
   receive a plurality of masked data portions from the plurality of clients (12), wherein the plurality of clients (12) are grouped into a plurality of partially overlapping client groups (18), and each masked data (14) portion is associated with one of the client groups (18);
   aggregate the masked data portions of each client group (18) to obtain a plurality of group data aggregates, wherein each group data aggregate is associated with a respective client group (18);

estimate, based on a quality metric for each of the plurality of group data aggregates, a set of malicious clients (12) of the plurality of clients (12);

determine a benign data aggregate based on a remaining plurality of benign clients, wherein the benign clients do not form part of the malicious clients (12).

15. A computer program comprising machine readable instructions, which when the computer program is executed by a processing unit cause the processing unit to implement a method according to any one of claims 1-13 and/or to implement and/or to control a system (10) according to claim 14.

EP 4 446 920 A1

Fig. 1

14

| requesting data from the plurality of clients | S10 |

| receiving a plurality of masked data portions from the plurality of clients | S12 |

| aggregating the masked data portions of each client group to obtain a plurality of group data aggregates | S14 |

| estimating, based on a quality metric for each of the plurality of group data aggregates, a subset of malicious clients of the plurality of clients | S16 |

| determining a benign data aggregate based on a remaining plurality of benign clients | S18 |

Fig. 2

Fig. 3

Fig. 4A

Fig. 4B

Fig. 4C

Fig. 5A

Fig. 5B

Fig. 5C

Fig. 5D

EP 4 446 920 A1

receiving a request for data at a client — S20

and transmitting a plurality of masked data portions from the client to a server, wherein the plurality of masked data portions are each associated with a different client group of a plurality of client groups, wherein each of the masked data portions is masked with a different mask, and wherein aggregating the masked data portions of each client in a client group unmasks an aggregate of underlying data of the masked data portions for obtaining a group data aggregate — S22

Fig. 6

Europäisches
Patentamt

European
Patent Office

Office européen
des brevets

# EUROPEAN SEARCH REPORT

**Application Number**

**EP 23 16 7522**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/242848 A1 (ERICSSON TELEFON AB L M [SE]) 24 November 2022 (2022-11-24) | 11-13 | INV.<br>G06F21/60<br>G06F21/62 |
| Y | * page 12, line 16 – line 19 *<br>* page 13, line 5 – line 8 *<br>* page 16, line 29 – line 31 *<br>* page 6, line 10 – line 13 *<br>----- | 1-10,14, 15 | |
| Y | HAIMABATI DEY ET AL: "Monitoring threshold cryptography based wireless sensor networks with projective plane", COMPUTERS AND DEVICES FOR COMMUNICATION (CODEC), 2012 5TH INTERNATIONAL CONFERENCE ON, IEEE,<br>17 December 2012 (2012-12-17), pages 1-4,<br>XP032385595,<br>DOI: 10.1109/CODEC.2012.6509229<br>ISBN: 978-1-4673-2619-3<br>* paragraph [II.A] *<br>----- | 1-10,14, 15 | |

TECHNICAL FIELDS
SEARCHED      (IPC)

G06F

The present search report has been drawn up for all claims

| Place of search | Date of completion of the search | Examiner |
|---|---|---|
| Munich | 31 August 2023 | Medvesan, Oana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 16 7522**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-08-2023**

| Patent document cited in search report | Publication date | Patent family member(s) | Publication date |
|---|---|---|---|
| WO 2022242848 A1 | 24-11-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BONAWITZ et al.** *Practical Secure Aggregation for Privacy-Preserving Machine Learning*

- **ZHANG et al.** *SAFELearning: Enable Backdoor Detectability In Federated Learning With Secure Aggregation*